# EUROPÄISCHE PATENTSCHRIFT

(11) **EP 2 755 847 B1**
(45) Veröffentlichungstag und Bekanntmachung des Hinweises auf die Patenterteilung: **10.04.2019**
(21) Anmeldenummer: 12758469.6
(22) Anmeldetag: 11.09.2012
(51) Int. Cl.: B60L 11/18, G06Q 50/06, G07F 15/00, H02J 7/00

(54) **VERFAHREN ZUM LADEN EINES IN EIN ELEKTROKRAFTFAHRZEUG EINGEBAUTEN AKKUMULATORS**
METHOD FOR CHARGING AN ACCUMULATOR INCORPORATED IN AN ELECTRICAL MOTOR VEHICLE
PROCÉDÉ POUR CHARGER UN ACCUMULATEUR INTÉGRÉ DANS UN VÉHICULE ÉLECTRIQUE

(30) Priorität: 13.09.2011 DE 102011082623
(43) Veröffentlichungstag der Anmeldung: 23.07.2014
(73) Patentinhaber: Continental Automotive GmbH, 30165 Hannover (DE)
(72) Erfinder: BÖLD, Martin, 93051 Regensburg (DE); HALAMEK, Herbert, 82515 Wolfratshausen (DE)
(86) Internationale Anmeldenummer: PCT/EP2012/067694
(87) Internationale Veröffentlichungsnummer: WO 2013/037748

(56) Entgegenhaltungen:
- DE-A1-102009 043 306
- US-A1- 2007 282 495
- US-A1- 2009 184 689

## Beschreibung

Die Erfindung bezieht sich auf ein Verfahren zum Laden eines in ein Elektrokraftfahrzeug eingebauten Akkumulators zum Speichern elektrischer Energie für den Betrieb eines Elektroantriebsmotors des Elektrokraftfahrzeugs mit aus einem Energieversorgungsnetz zu entnehmender elektrischer Energie. Elektrokraftfahrzeuge besitzen Akkumulatoren, die die für das Fahren der Elektrokraftfahrzeuge, das heißt den Betrieb der Elektroantriebsmotoren der Elektrokraftfahrzeuge, erforderliche elektrische Energie speichern. Die Akkumulatoren werden über ein Energieversorgungsnetz, gemeinhin als Stromnetz bezeichnet, aufgeladen. Aus DE 10 2008 044 526 A1 sind ein Verfahren und ein System bekannt, welche die Nutzung ortsfester Stromtankstellen, die jeweils über eine erste Kommunikationsverbindung mit einer Speicher- und Verbrauchseinheit sowie über eine zweite Kommunikationsverbindung mit einem Abrechnungsserver verbunden werden, vorsehen. Weiterhin ist aus DE 10 2008 044 527 A1 ein mobiler Stromzähler zu einem ortsunabhängigen Strombezug an einer ortsfesten Stromtankstelle bekannt, wobei der mobile Stromzähler in eine mobile Speicher- und Verbrauchseinheit integriert oder an dieser anbringbar ist.

US2009184689 A1 wird als nächstliegender Stand der Technik angesehen und offenbart die Präambel des unabhängigen Anspruchs 1.

Aufgabe der Erfindung ist es, ein Verfahren anzugeben, das auf einfache und kostengünstige Weise sowohl ein unkompliziertes Laden des Akkumulators als auch eine zuverlässige Abrechnung der aus dem Energieversorgungsnetz zum Laden entnommenen Energiemenge ermöglicht.

Diese Aufgabe wird erfindungsgemäß mit einem Verfahren der eingangs genannten Art nach Anspruch 1 gelöst, wobei der Akkumulator mit einer an das Energieversorgungsnetz angeschlossenen, als Niederspannungssteckdose ausgebildeten Steckdose verbunden wird, wobei eine Zähleridentifikationskennung eines die aus dem Energieversorgungsnetz über die Steckdose gelieferte elektrische Energie messenden stationären Stromzählers an einen Zentralrechner übermittelt wird, wobei der Fahrzeugstandort des Elektrokraftfahrzeugs an den Zentralrechner übermittelt wird, wobei von dem Zentralrechner ein dem Stromzähler zugeordneter Zählerstandort mit dem übermittelten Fahrzeugstandort des Elektrokraftfahrzeugs verglichen wird und wobei bei Übereinstimmung des Zählerstandorts mit dem übermittelten Fahrzeugstandort ein das Laden des Akkumulators initiierendes Ladesignal von dem Zentralrechner an ein das Laden des Akkumulators steuerndes Ladegerät des Elektrokraftfahrzeugs gesendet wird.

Die Bezeichnung Elektrokraftfahrzeug ist bei der Erfindung nicht beschränkt auf ein Fahrzeug, welches ausschließlich einen Elektroantriebsmotor aufweist, sondern es kann sich bei dem Elektrokraftfahrzeug auch um ein Hybridelektrokraftfahrzeug handeln, welches sowohl einen Elektroantriebsmotor als auch zumindest einen anderen Antriebsmotor, zum Beispiel eine Brennkraftmaschine, besitzt.

Von besonderem Vorteil ist bei dem erfindungsgemäßen Verfahren, dass zum Laden des Akkumulators keine aufwendige Ladeinfrastruktur erforderlich ist. Insbesondere muss ein Laden nicht an speziellen Stromtankstellen erfolgen, welche besondere Vorrichtungen zur Identifikation des Benutzers und/oder des Fahrzeugs sowie zur Ladesteuerung aufweisen. Vielmehr sieht das erfindungsgemäße Verfahren eine Nutzung einer üblichen Niederspannungssteckdose, wie sie in jedem Haushalt vorhanden ist, vor. Eine solche Steckdose wird üblicherweise auch als Haushaltssteckdose bezeichnet. Zusätzliche Einrichtungen an der Steckdose wie zum Beispiel Sende-/Empfangseinrichtungen oder Ladesteuereinrichtungen sind mit der Erfindung überflüssig. Die Steckdose ist eine Einphasenwechselstromsteckdose zur Stromversorgung mit einer Spannung von 230 V oder ist eine Dreiphasenwechselstromsteckdose zur Stromversorgung mit einer Spannung von 400 V. Das Verbinden des Akkumulators mit der Steckdose erfolgt zum Beispiel mittels eines Elektroladekabels oder beispielsweise über eine induktive Ladeeinrichtung.

Die elektrische Energie, die aus dem Energieversorgungsnetz über die Steckdose geliefert wird, wird mittels eines Stromzählers gemessen. Grundsätzlich ist der Stromzähler einem bestimmten Abnehmer und einem bestimmten Standort, durch Zuordnung zu einer Postadresse, zugeordnet. Um Missbrauch vorzubeugen, sieht die Erfindung vor, dass eine Zähleridentifikationskennung, in einfacher Weise zum Beispiel eine Zählernummer, des Stromzählers an einen Zentralrechner übermittelt wird. Das kann beispielsweise durch manuelle Eingabe der Zähleridentifikationskennung durch einen Fahrzeugnutzer des Elektrokraftfahrzeugs in ein Mobiltelefon und Übertragung der Kennung über eine Mobilfunkverbindung eines Mobilfunknetzes an den Zentralrechner erfolgen. Denkbar ist zum Beispiel auch eine Eingabe der Zähleridentifikationskennung in einen Computer, beispielsweise einen Personalcomputer (PC), und Übertragung der Kennung über eine Datenverbindung, drahtgebunden oder drahtlos, an den Zentralrechner. Mittels der Zähleridentifikationskennung ist eine eindeutige Zuordnung von aus dem Energieversorgungsnetz entnommener elektrischer Energie zu einem bestimmten Stromzähler und somit einem bestimmten Haushalt oder zugeordneten Kunden eines die elektrische Energie zur Verfügung stellenden Energieversorgers ermöglicht, so dass eine diesem zugeordnete Abrechnung der entnommenen elektrischen Energie erfolgen kann.

Der Fahrzeugstandort wird mittels Fahrzeugpositionsdaten angegeben. In einfacher Weise handelt es sich dabei um GPS (Global Positioning System) -Daten. Die Fahrzeugpositionsdaten werden über eine GSM(Global System for Mobile Communications)-Verbindung, an den Zentralrechner übermittelt. Bevorzugt wird der Fahrzeugstandort mit einem Toleranzbereich angegeben.

Der Zentralrechner, bei dem es sich um einen sogenannten Back-End-Server handelt, ist ein Rechner eines elektrische Energie in dem Energieversorgungsnetz zur Verfügung stellenden Energieversorgers oder Zentralrechner ist jedoch nicht identisch mit dem Rechner des Energieversorgers, sondern ist mit diesem Rechner zumindest zeitweise zur Datenübermittlung verbunden; so ist es möglich, das Laden von Akkumulatoren von Elektrokraftfahrzeugen unabhängig vom Energieversorger über einen gemeinsamen Zentralrechner abzuwickeln. Im Grundsatz mit jedem Energieversorger, der elektrische Energie in das Energieversorgungsnetz einspeist und mit welchem gegebenenfalls ein Liefervertrag zwischen beispielsweise Fahrzeugnutzer oder Steckdoseninhaber sowie Energieversorger besteht, kann somit ein erfindungsgemäßes Laden des Akkumulators erfolgen.
Eine aufwendige Wartung und Instandhaltung von zum Beispiel Stromtankstellen oder speziell ausgerüsteten, zum Beispiel eine Identifikationseinrichtung und gegebenenfalls eine Ladesteuervorrichtung aufweisenden Steckdosen ist mit der Erfindung nicht erforderlich. Die Wartungs- und Instandhaltungskosten sind damit vorteilhaft günstig.

Ein Laden des Akkumulators erfolgt mit dem erfindungsgemäßen Verfahren erst dann, wenn das Ladesignal an das Ladegerät gesendet worden ist. Das Ladesignal initiiert das Laden des Ackumulators, wobei sowohl ein unmittelbarer Beginn des Ladens nach Erhalt des Ladesignals von dem Ladegerät denkbar ist als auch ein zeitversetztes Laden. Eine Steuerung des Ladens des Akkumulators erfolgt durch das Ladegerät auf der Basis des Ladesignals und gegebenenfalls weiterer, von dem Zentralrechner erhaltener Ladedaten. Die Ladedaten werden durch den Zentralrechner und/oder den Rechner des Energieversorgers zur Verfügung gestellt und können beispielsweise dazu beitragen, eine Überlastung des Energieversorgungsnetzes zu vermeiden, wenn sie zum Beispiel Vorgaben für einen Ladezeitpunkt und/oder eine Ladegeschwindigkeit für das Ladegerät umfassen.

Gemäß einer vorteilhaften Weiterbildung der Erfindung wird eine Fahrzeugidentifikationskennung an den Zentralrechner übermittelt. Bevorzugt wird die Fahrzeugidentifikationskennung vor dem Beginn des Ladens des Akkumulators an den Zentralrechner übermittelt; vorzugsweise kann die Fahrzeugidentifikationskennung zusammen mit dem Fahrzeugstandort an den Zentralrechner übermittelt werden. Somit ist eine eindeutige Zuordnung von aus dem Energieversorgungsnetz entnommener elektrischer Energie zu einem bestimmten Elektrokraftfahrzeug - und damit zu dessen Fahrzeughalter oder gegebenenfalls Fahrzeugnutzer - ermöglicht. Vorzugsweise wird die Fahrzeugidentifikationskennung über eine Mobilfunkverbindung, zum Beispiel eine GSM-Verbindung, an den Zentralrechner übermittelt. Mit der vorbeschriebenen Weiterbildung der Erfindung kann eine Abrechnung der zum Laden des Akkumulators gelieferten Energie nicht nur über die Steckdose und den zugehörigen Stromzähler erfolgen, sondern die Abrechnung kann zudem fahrzeugindividuell vorgenommen werden. Insbesondere kann damit auch eine Lieferung und Abrechnung von gegebenenfalls zusammen mit einem Kauf oder einem Mieten des Elektrokraftfahrzeugs erworbenen Energiekontingenten erfolgen.

Eine möglichst gleichmäßige Auslastung des Energieversorgungsnetzes kann erreicht werden, wenn gemäß einer anderen vorteilhaften Weiterbildung der Erfindung von dem Zentralrechner zusammen mit dem Ladesignal einen Ladezeitpunkt umfassende Ladedaten an das Ladegerät gesendet werden. Mit diesen Ladedaten erhält das Ladegerät somit nicht nur durch das Ladesignal den Hinweis, dass das Laden freigegeben ist und begonnen werden kann, sondern durch den Ladezeitpunkt zusätzlich auch einen Hinweis, wann das Laden erfolgen soll.

Einer anderen vorteilhaften Weiterbildung der Erfindung entsprechend ist vorgesehen, dass von dem Zentralrechner oder von einem mit dem Zentralrechner verbundenen Rechner eines elektrische Energie in dem Energieversorgungsnetz zur Verfügung stellenden Energieversorgers ein zumindest einen Ladezeitraum und eine Ladeenergiemenge angebender Ladeplan erstellt wird und dass den Ladeplan umfassende Ladedaten von dem Zentralrechner an das Ladegerät übermittelt werden. Auf diese Weise kann eine Überlastung des Energieversorgungsnetzes beispielsweise auch dann vorausschauend vermieden werden, wenn allgemein eine große Anzahl eingeschalteter elektrischer Verbraucher vorhanden oder zu erwarten ist und zudem ein Laden von Akkumulatoren einer Vielzahl von Elektrokraftfahrzeugen erfolgen soll. Der Ladeplan kann zum Beispiel auch eine tageszeit- und/oder nutzervertragsabhängige Zuteilung elektrischer Energie umfassen.

Das Ladegerät startet gemäß einer anderen vorteilhaften Weiterbildung der Erfindung in Abhängigkeit von dem Ladesignal und den Ladedaten das Laden des Akkumulators und steuert die aus dem Energieversorgungsnetz zum Laden des Akkumulators zu entnehmende Energiemenge. Dadurch kann der eigentliche Ladevorgang unabhängig von dem Zentralrechner oder dem Rechner des Energieversorgers, gesteuert allein durch das Ladegerät des Elektrokraftfahrzeugs, erfolgen, wobei aber dennoch zum Beispiel das Energieversorgungsnetz betreffende übergeordnete Informationen, die in den Ladedaten beinhaltet sind, berücksichtigt werden.

Man könnte sich vorstellen, dass von einem festen Wert, zum Beispiel einer Leistung von 2 kW, für eine maximale Strombelastbarkeit der Steckdose ausgegangen und dementsprechend das Laden des Akkumulators von dem Ladegerät gesteuert wird. Vorteilhaft ist es hingegen, wenn gemäß einer anderen Weiterbildung der Erfindung vor dem Senden des Ladesignals ein Wert für die maximale Strombelastbarkeit der Steckdose an den Zentralrechner übermittelt wird, so dass diese Information über die maximale Strombelastbarkeit für das Ladesignal, insbesondere aber auch für eine noch präzisere Erstellung eines Ladeplans, durch den Zentralrechner und/oder den Rechner des Energieversorgers berücksichtigt werden kann.

Ebenfalls vorteilhaft für eine Erstellung eines möglichst genauen Ladeplans ist es, wenn gemäß einer anderen Weiterbildung der Erfindung vor dem Senden des Ladesignals ein Wert für den Ladezustand des Akkumulators an den Zentralrechner übermittelt wird, so dass diese Information über den Ladezustand des Akkumulators durch den Zentralrechner und/oder den Rechner des Energieversorgers berücksichtigt werden kann.

Gemäß einer anderen vorteilhaften Weiterbildung der Erfindung wird während des Ladens des Akkumulators von dem Ladegerät regelmäßig ein Wert für den jeweiligen Ladezustand des Akkumulators an den Zentralrechner übermittelt. So kann beispielsweise bei einer starken Auslastung des Energieversorgungsnetzes das individuelle Laden des Akkumulators des einzelnen Elektrokraftfahrzeugs kurzfristig angepasst und gegebenenfalls zeitlich gestreckt werden.

Wird einer anderen vorteilhaften Weiterbildung der Erfindung gemäß nach Abschluss des Ladens des Akkumulators von dem Ladegerät ein Wert für die zum aktuellen Laden des Akkumulators aus dem Energieversorgungsnetz entnommene Energiemenge an den Zentralrechner übermittelt, so kann dieser Wert für die entnommene Energiemenge mit dem nach dem Zählerstand des Stromzählers ermittelten Wert für die entnommene Energiemenge abgeglichen und somit die Abrechnung der Energiemenge noch zuverlässiger durchgeführt werden.

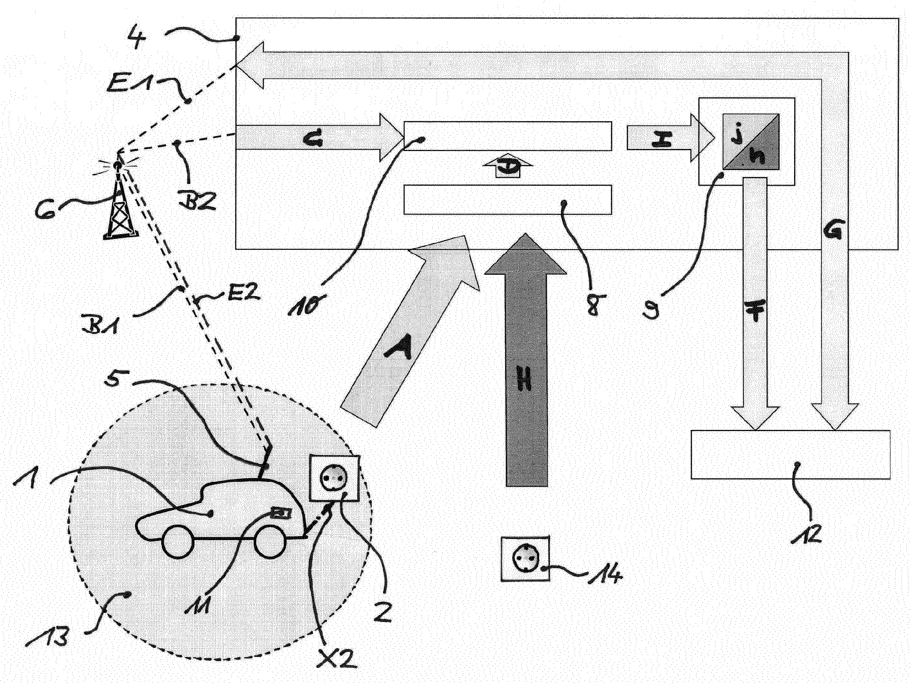

Ein Ausführungsbeispiel der Erfindung wird im Folgenden anhand der Zeichnung näher beschrieben. Es zeigt die
- einzige Figur: eine Darstellung eines Verfahrens zum Laden eines in ein Elektrokraftfahrzeug eingebauten Akkumulators.

In schematisierter Darstellung ist in der einzigen Figur ein Verfahren zum Laden eines in ein Elektrokraftfahrzeug 1 eingebauten Akkumulators zum Speichern elektrischer Energie für den Betrieb eines Elektroantriebsmotors des Elektrokraftfahrzeugs 1 mit aus einem Energieversorgungsnetz zu entnehmender elektrischer Energie gezeigt. Dabei wird der Akkumulator mit einer an das Energieversorgungsnetz angeschlossenen, als Niederspannungssteckdose ausgebildeten Steckdose 2 verbunden (strichpunktierte Linie X2).

Ein Pfeil A symbolisiert eine Übermittlung einer Zähleridentifikationskennung eines die aus dem Energieversorgungsnetz über die Steckdose 2 gelieferte elektrische Energie messenden stationären Stromzählers an einen Zentralrechner 4. Gestrichelte Linien B1, B2 symbolisieren eine Übermittlung des Fahrzeugstandorts des Elektrokraftfahrzeugs 1 an den Zentralrechner 4 ausgehend von einer Antenne 5 des Elektrokraftfahrzeugs 1 und unter Zwischenschaltung einer Funkstation 6.

In einem Speicher 8 des Zentralrechners 4 ist ein dem durch die Zähleridentifikationskennung bestimmten Stromzähler zugeordneter Zählerstandort abgelegt. In einem Vergleicher 10 des Zentralrechners 4 gehen, symbolisiert durch einen ersten Pfeil C, der Fahrzeugstandort sowie, symbolisiert durch einen zweiten Pfeil D, der Zählerstandort ein. Fahrzeugstandort und Zählerstandort werden miteinander verglichen. Das Ergebnis des Vergleichs wird an ein Steuerelement 9 weitergeleitet (Pfeil I) und lautet entweder Übereinstimmung ja (j) oder Übereinstimmung nein (n). Da eine völlige Übereinstimmung von den Fahrzeugstandort angebenden Daten und den Zählerstandort angebenden Daten schon deshalb regelmäßig nicht zu erreichen ist, weil technisch bedingt Stromzähler und Elektrokraftfahrzeug sich grundsätzlich nicht an einem identischen Ort befinden können, ist um das Elektrokraftfahrzeug 1 ein Toleranzbereich 13 vorgesehen, innerhalb welchem der Stromzähler - hier symbolisiert durch die Steckdose 2 - angeordnet sein muss, damit von einer Übereinstimmung von Fahrzeugstandort und Zählerstandort ausgegangen wird.

Bei Übereinstimmung des gespeicherten Zählerstandorts mit dem übermittelten Fahrzeugstandort wird ein das Laden des Akkumulators initiierendes Ladesignal von dem Zentralrechner 4 an ein das Laden des Akkumulators steuerndes Ladegerät 11 des Elektrokraftfahrzeugs 1 unter Zwischenschaltung der Funkstation 6 gesendet, hier durch gestrichelte Linien E1, E2 symbolisiert.

Hierzu wird das Ergebnis des Vergleichs von gespeichertem Zählerstandort und übermitteltem Fahrzeugstandort zunächst an einen mit dem Zentralrechner 4 über eine Datenverbindung verbundenen Rechner 12 eines elektrische Energie in dem Energieversorgungsnetz zur Verfügung stellenden Energieversorgers weitergeleitet, wie durch einen Pfeil F symbolisiert. Zum Beispiel unter Berücksichtigung einer momentanen Auslastung des Energieversorgungsnetzes erhält, hier symbolisiert durch einen Pfeil G, der Zentralrechner 4 von dem Rechner 12 des Energieversorgers Angaben zur Generierung des Ladesignals. Beispielsweise können diese Angaben einen Hinweis enthalten, dass das Laden des Akkumulators in einer bestimmten Anzahl von Stunden zu erfolgen hat; das von dem Zentralrechner 4 generierte Ladesignal erhält in einem solchen Fall ergänzend einen Ladezeitpunkt umfassende Ladedaten, also eine Zeitkomponente, die das Ladegerät 11 anweist, das Laden in der entsprechenden Anzahl von Stunden zu starten.

In dem vorangehend beschriebenen Fall liegt eine Übereinstimmung von Zählerstandort und Fahrzeugstandort vor. Wird jedoch, in der Figur symbolisiert durch einen alternativen Pfeil H, eine Zähleridentifikationskennung eines die aus dem Energieversorgungsnetz über eine andere Steckdose 14 gelieferte elektrische Energie messenden weiteren stationären Stromzählers an den Zentralrechner 4 übermittelt, so stimmt der Zählerstandort, der diesem Stromzähler zugeordnet ist, nicht mit dem übermittelten Fahrzeugstandort überein, und es wird kein Ladesignal von dem Zentralrechner 4 an das Ladegerät 11 des Elektrofahrzeugs 1 gesendet. Aus den unterschiedlichen Standorten von Stromzähler und Elektrokraftfahrzeug 1 kann in einem solchen Fall geschlossen werden, dass das Elektrokraftfahrzeug 1 nicht tatsächlich an der angegebenen Steckdose 14 aufgeladen werden soll; Ursache dafür könnte zum Beispiel eine - technisch bedingt oder versehentlich - fehlerhafte Angabe der Zähleridentifikationskennung oder ein Missbrauchsversuch sein.

## Patentansprüche

1. Verfahren zum Laden eines in ein Elektrokraftfahrzeug (1) eingebauten Akkumulators zum Speichern elektrischer Energie für den Betrieb eines Elektroantriebsmotors des Elektrokraftfahrzeugs (1) mit aus einem Energieversorgungsnetz zu entnehmender elektrischer Energie,
wobei der Akkumulator mit einer an das Energieversorgungsnetz angeschlossenen, als Niederspannungssteckdose ausgebildeten Steckdose (2), wie sie in jedem Haushalt vorhanden ist und als Einphasenwechselstromsteckdose mit einer Spannung von 230 V oder als Dreiphasenwechselstromsteckdose mit einer Spannung von 400 V ausgebildet ist, mittels eines Elektrokabels oder über eine induktive Ladeeinrichtung verbunden wird, **dadurch gekennzeichnet , dass** eine als Zählernummer ausgebildete Zähleridentifikationskennung eines die aus dem Energieversorgungsnetz über die Steckdose (2) gelieferte elektrische Energie messenden stationären Stromzählers, welcher einem Haushalt und somit einem bestimmten Abnehmer und einem bestimmten Standort durch Zuordnung zu einer Postadresse, zugeordnet ist, wodurch eine diesem zugeordnete Abrechnung der entnommenen elektrischen Energie erfolgen kann, an einen als Back-End-Server ausgebildeten Zentralrechner (4) übermittelt wird, wobei der Zentralrechner (4) ein Rechner eines elektrische Energie in dem Energieversorgungsnetz zur Verfügung stellenden Energieversorgers oder ein mit diesem Rechner zumindest teilweise zur Datenübertragung verbundener Rechner ist, wobei der Fahrzeugstandort des Elektrokraftfahrzeugs (1), der mittels Fahrzeugpositionsdaten über Global Positioning System-Daten angegeben wird, über eine Mobilfunkverbindung über Global System for Mobile Communications-Verbindung, an den Zentralrechner (4) ausgehend von einer Antenne (5) des Elektrokraftfahrzeugs (1) unter Zwischenschaltung einer Funkstation (6) übermittelt wird, wobei von dem Zentralrechner (4) ein dem Stromzähler zugeordneter Zählerstandort mit dem übermittelten Fahrzeugstandort des Elektrokraftfahrzeugs (1) verglichen wird und
wobei bei Übereinstimmung des Zählerstandorts mit dem übermittelten Fahrzeugstandort ein das Laden des Akkumulators initiierendes Ladesignal von dem Zentralrechner (4) an ein das Laden des Akkumulators steuerndes Ladegerät (11) des Elektrokraftfahrzeugs (1) unter Zwischenschaltung der Funkstation (6) gesendet wird, wobei falls der Zählerstandort mit dem übermittelten Fahrzeugstandort nicht übereinstimmt, kein Ladesignal vom Zentralrechner (4) an das Ladegerät (11) des Elektrokraftfahrzeugs (1) gesendet wird.

2. Verfahren nach Anspruch 1, **dadurchgekennzeichnet**, dass eine Fahrzeugidentifikationskennung an den Zentralrechner (4) übermittelt wird.

3. Verfahren nach Anspruch 1 oder 2, **dadurch gekennzeichnet, dass** von dem Zentralrechner (4) zusammen mit dem Ladesignal einen Ladezeitpunkt umfassende Ladedaten an das Ladegerät (11) gesendet werden.

4. Verfahren nach einem der vorhergehenden Ansprüche, **dadurch gekennzeichnet, dass** von dem Zentralrechner (4) oder von einem mit dem Zentralrechner (4) verbundenen Rechner (12) eines elektrische Energie in dem Energieversorgungsnetz zur Verfügung stellenden Energieversorgers ein zumindest einen Ladezeitraum und eine Ladeenergiemenge angebender Ladeplan erstellt wird und dass den Ladeplan umfassende Ladedaten von dem Zentralrechner (4) an das Ladegerät (11) übermittelt werden.

5. Verfahren nach einem der vorhergehenden Ansprüche, **dadurch gekennzeichnet, dass** das Ladegerät (11) in Abhängigkeit von dem Ladesignal und den Ladedaten das Laden des Akkumulators startet und die aus dem Energieversorgungsnetz zum Laden des Akkumulators zu entnehmende Energiemenge steuert.

6. Verfahren nach einem der vorhergehenden Ansprüche, **dadurch gekennzeichnet, dass** vor dem Senden des Ladesignals ein Wert für die maximale Strombelastbarkeit der Steckdose (2) an den Zentralrechner (4) übermittelt wird.

7. Verfahren nach einem der vorhergehenden Ansprüche, **dadurch gekennzeichnet, dass** vor dem Senden des Ladesignals ein Wert für den Ladezustand des Akkumulators an den Zentralrechner (4) übermittelt wird.

8. Verfahren nach einem der vorhergehenden Ansprüche, **dadurch gekennzeichnet, dass** während des Ladens des Akkumulators von dem Ladegerät (11) regelmäßig ein Wert für den jeweiligen Ladezustand des Akkumulators an den Zentralrechner (4) übermittelt wird.

9. Verfahren nach einem der vorhergehenden Ansprüche, **dadurch gekennzeichnet, dass** nach Abschluss des Ladens des Akkumulators von dem Ladegerät (11) ein Wert für die zum aktuellen Laden des Akkumulators aus dem Energieversorgungsnetz entnommene Energiemenge an den Zentralrechner (4) übermittelt wird.

## Claims

1. Method for charging an accumulator, which is incorporated in an electric motor vehicle (1), for storing electrical energy for the operation of an electric drive motor of the electric motor vehicle (1) with electrical energy to be taken from an energy supply network,
wherein the accumulator is connected to a plug socket (2) which is connected to the energy supply network and is in the form of a low-voltage plug socket, such as is present in every household and is in the form of a single-phase alternating current plug socket at a voltage of 230 V or a three-phase alternating current plug socket at a voltage of 400 V, by means of an electrical cable or via an inductive charging device,
**characterized in that**
a meter identifier, in the form of a meter number, of a stationary electricity meter, which measures the electrical energy supplied from the energy supply network via the plug socket (2), which electricity meter is assigned to a household and therefore to a particular customer and to a particular location by assignment to a postal address, with the result that billing, assigned thereto, of the electrical energy taken can occur, is transmitted to a central computer (4), in the form of a back-end server, wherein the central computer (4) is a computer of an energy supplier that supplies electrical energy in the energy supply network or a computer connected to this computer at least partly for data transmission,
wherein the vehicle location of the electric motor vehicle (1), which is specified by means of vehicle position data via global positioning system data, via a mobile radio connection via a global system for mobile communications connection, is transmitted to the central computer (4), from an antenna (5) of the electric motor vehicle (1) and with intermediate connection to a radio station (6), wherein a meter location assigned to the electricity meter is compared to the transmitted vehicle location of the electric motor vehicle (1) by the central computer (4) and
wherein, in the case of agreement between the meter location and the transmitted vehicle location, a charging signal which initiates the charging of the accumulator is sent from the central computer (4) to a charging device (11) of the electric motor vehicle (1), which charging device controls the charging of the accumulator with intermediate connection to the radio station (6), wherein, if the meter location does not agree with the transmitted vehicle location, no charging signal is sent from the central computer (4) to the charging device (11) of the electric motor vehicle (1).

2. Method according to Claim 1, **characterized in that** a vehicle identifier is transmitted to the central computer (4) .

3. Method according to Claim 1 or 2, **characterized in that** charging data comprising a charging instant is sent together with the charging signal from the central computer (4) to the charging device (11).

4. Method according to one of the preceding claims, **characterized in that** a charging plan, which specifies at least a charging period and an amount of charging energy, is generated by the central computer (4) or by a computer (12), which is connected to the central computer (4), of an energy supplier supplying electrical energy in the energy supply network, and **in that** charging data comprising the charging plan is transmitted from the central computer (4) to the charging device (11).

5. Method according to one of the preceding claims, **characterized in that** the charging device (11) starts the charging of the accumulator on the basis of the charging signal and the charging data and controls the amount of energy to be taken from the energy supply network to charge the accumulator.

6. Method according to one of the preceding claims, **characterized in that**, before the charging signal is sent, a value for the maximum current loading capacity of the plug socket (2) is transmitted to the central computer (4) .

7. Method according to one of the preceding claims, **characterized in that**, before the charging signal is sent, a value for the charging state of the accumulator is transmitted to the central computer (4).

8. Method according to one of the preceding claims, **characterized in that**, during the charging of the accumulator by the charging device (11), a value for the respective charging state of the accumulator is regularly transmitted to the central computer (4).

9. Method according to one of the preceding claims, **characterized in that**, after the charging of the accumulator by the charging device (11) has finished, a value for the amount of energy taken from the energy supply network for the present charging of the accumulator is transmitted to the central computer (4).

## Revendications

1. Procédé pour charger un accumulateur incorporé dans un véhicule automobile électrique (1) destiné à l'accumulation d'énergie électrique servant au fonctionnement d'un moteur de propulsion électrique du véhicule automobile électrique (1) avec de l'énergie électrique à prélever d'un réseau de distribution d'énergie, l'accumulateur étant relié, au moyen d'un câble électrique ou par le biais d'un dispositif de charge inductif, à une prise électrique (2) connectée au réseau de distribution d'énergie et configurée sous la forme d'une prise électrique à basse tension telle qu'elle est présente dans chaque domicile et qui est réalisée sous la forme d'une prise électrique à courant alternatif monophasé avec une tension de 230 V ou d'une prise électrique à courant alternatif triphasé avec une tension de 400 V, **caractérisé en ce qu'**un identificateur de compteur configuré sous la forme d'un numéro de compteur d'un compteur électrique fixe qui mesure l'énergie électrique délivrée depuis le réseau de distribution d'énergie par le biais de la prise électrique (2), lequel est attribué à un domicile et ainsi à un récepteur défini et à un emplacement défini par association à une adresse postale, ce par quoi une facturation qui lui est associée de l'énergie électrique prélevée peut être effectuée, est communiqué à un ordinateur central (4) configuré sous la forme d'un serveur principal, l'ordinateur central (4) étant un ordinateur d'un fournisseur d'énergie qui met de l'énergie électrique à disposition dans le réseau de distribution d'énergie ou un ordinateur connecté à cet ordinateur au moins partiellement pour la transmission de données,
l'emplacement de véhicule du véhicule automobile électrique (1), lequel est indiqué au moyen de données de position de véhicule par le biais des données du système mondial de localisation, étant communiqué à l'ordinateur central (4) par le biais d'une liaison de radiocommunication mobile par une liaison du système mondial de communications mobiles à partir d'une antenne (5) du véhicule automobile électrique (1) en interconnectant une station radio (6),
un emplacement de compteur associé au compteur électrique étant comparé par l'ordinateur central (4) à l'emplacement de véhicule du véhicule automobile électrique (1) communiqué et
en cas de concordance entre l'emplacement de compteur et l'emplacement de véhicule communiqué, un signal de charge qui initie la charge de l'accumulateur étant envoyé par l'ordinateur central (4) à un chargeur (11) du véhicule automobile électrique (1) qui commande la charge de l'accumulateur en interconnectant la station radio (6), aucun signal de charge n'étant envoyé par l'ordinateur central (4) au chargeur (11) du véhicule automobile électrique (1) dans le cas où l'emplacement du compteur ne coïncide pas avec l'emplacement de véhicule communiqué.

2. Procédé selon la revendication 1, **caractérisé en ce qu'**un identificateur de véhicule est communiqué à l'ordinateur central (4).

3. Procédé selon la revendication 1 ou 2, **caractérisé en ce que** des données de charge comprenant un instant de charge sont envoyées au chargeur (11) par l'ordinateur central (4) conjointement avec le signal de charge.

4. Procédé selon l'une des revendications précédentes, **caractérisé en ce qu'**un plan de charge, qui indique au moins une période de charge et une quantité d'énergie de charge, est créé par l'ordinateur central (4) ou par un ordinateur (12), connecté à l'ordinateur central (4), d'un fournisseur d'énergie qui met de l'énergie électrique à disposition dans le réseau de distribution d'énergie et **en ce que** des données de charge comprenant le plan de charge sont communiquées au chargeur (11) par l'ordinateur central (4).

5. Procédé selon l'une des revendications précédentes, **caractérisé en ce que** le chargeur (11) démarre la charge de l'accumulateur en fonction du signal de charge et des données de charge et commande la quantité d'énergie à prélever du réseau de distribution d'énergie pour la charge de l'accumulateur.

6. Procédé selon l'une des revendications précédentes, **caractérisé en ce qu'**avant l'envoi du signal de charge, une valeur du courant maximal admissible de la prise électrique (2) est communiquée à l'ordinateur central (4).

7. Procédé selon l'une des revendications précédentes, **caractérisé en ce qu'**avant l'envoi du signal de charge, une valeur de l'état de charge de l'accumulateur est communiquée à l'ordinateur central (4).

8. Procédé selon l'une des revendications précédentes, **caractérisé en ce que** pendant la charge de l'accumulateur par le chargeur (11) une valeur de l'état de charge respectif de l'accumulateur est régulièrement communiquée à l'ordinateur central (4).

9. Procédé selon l'une des revendications précédentes, **caractérisé en ce qu'**après l'achèvement de la charge de l'accumulateur par le chargeur (11), une valeur de la quantité d'énergie prélevée du réseau de distribution d'énergie pour la charge actuelle de l'accumulateur est communiquée à l'ordinateur central (4).
